# EUROPEAN PATENT SPECIFICATION

(11) **EP 1 125 536 B1**
(45) Date of publication and mention of the grant of the patent: **07.01.2004**
(21) Application number: 01102399.1
(22) Date of filing: 02.02.2001
(51) Int. Cl.: A47J 31/40, A47J 31/00, A47J 31/44

(54) **Espresso coffee machine**
Espressokaffeemaschine
Machine à café espresso

(30) Priority: 04.02.2000 IT BO000048
(43) Date of publication of application: 22.08.2001
(73) Proprietor: M. M. Design S.r.l., 39042 Bressanone (IT)
(72) Inventor: Terzariol, Alessandro, 39043 Chiusa (IT)
(74) Representative: Bongiovanni, Simone

(56) References cited:
- EP-A- 0 087 550
- EP-A- 0 784 955
- FR-A- 2 123 758
- US-A- 4 728 281
- US-A- 5 974 949

## Description

The present invention relates to an espresso coffee machine according to the preamble of claim 1.

More specifically, the present invention relates to an electric espresso coffee machine of the type disclosed, for example, in EP-A2-0 087 550 (which is considered to represent the closest prior art), in EP-A1-0 784 955, and in US 5,974,949.

This known coffee machines comprise a tank; a seat for ground coffee; a heating assembly for feeding hot water under pressure to said seat; and a pump for feeding water under pressure from the tank to the heating assembly.

The above components are normally housed in a substantially C-shaped frame, the base of which also defines a supporting surface for a cup for receiving the liquid coffee produced by the machine.

Known espresso coffee machines of the above type have several drawbacks, foremost of which is that the machine itself, being relatively bulky and heavy, cannot be packed easily for travel purposes.

It is an object of the present invention to provide an espresso coffee machine designed to eliminate the aforementioned drawbacks.

More specifically, it is an object of the present invention to provide an espresso coffee machine which is relatively compact and therefore easily portable for travel purposes.

According to the present invention, there is provided a portable espresso coffee machine as recited in Claim 1.

An embodiment of the invention will be described by way of example with reference to the accompanying drawings, in which:
Figures 1 and 2 show views in perspective of a preferred embodiment of the machine according to the present invention in two different operating positions;
Figure 3 shows a partly sectioned side view of the Figure 1 and 2 machine;
Figure 4 shows a larger-scale, exploded view in perspective, with parts in section and parts removed for clarity, of a first detail of the Figure 1 and 2 machine;
Figure 5 shows a larger-scale section along line V-V in Figure 3;
Figure 6 shows a larger-scale section along line VI-VI in Figure 3;
Figure 7 shows a larger-scale bottom plan view of the Figure 1 and 2 machine, with a second detail of the machine in two different operating positions;
Figure 8 shows an exploded view in perspective of a third detail of the Figure 1 and 2 machine;
Figure 9 shows a larger-scale exploded view in perspective of a detail in Figure 8;
Figures 10a and 10b show the Figure 9 detail in two different operating positions.

Number 1 in the accompanying drawings indicates as a whole an electric espresso coffee machine having a substantially vertical longitudinal axis 2 and a substantially oval cross section, and comprising a tubular outer casing 3 coaxial with axis 2 and in turn comprising two tubular bodies 4, 5 coaxial with axis 2, and of which body 4 is located above body 5.

In variations not shown, machine 1 may have a substantially circular, pentagonal, convex or rounded-edged cross section.

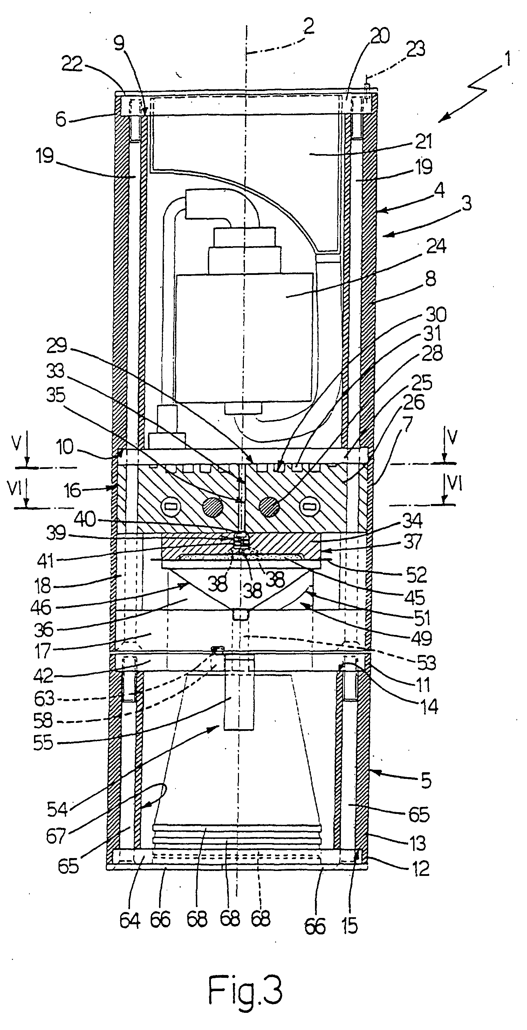

With reference to Figure 3, body 4 comprises two wide end portions 6, 7, of which portion 6 is located above portion 7; and a narrow intermediate portion 8 defined at the top by a substantially flat surface 9 and at the bottom by a substantially flat surface 10 parallel to surface 9. Body 5 comprises two wide end portions 11, 12, of which portion 11 is located over portion 12; and a narrow intermediate portion 13 defined at the top and bottom by respective substantially flat surfaces 14 and 15 parallel to surfaces 9 and 10.

Machine 1 comprises a heating assembly 16 and a tubular guide body 17, which are mounted to slide axially along portion 7, and are locked axially, along portion 7 and via the interposition of an annular spacer 18, by two connecting screws 19, which extend parallel to axis 2 and through portion 8 to engage respective holes (not shown) formed in an annular member 20 housed in portion 6, coaxial with axis 2, and contacting surface 9.

Machine 1 also comprises a tank 21 projecting downwards from member 20 and having an open top end defined by a lid 22 hinged to member 20 to rotate, with respect to member 20, about an axis 23 parallel to axis 2; and a pump 24, which is housed substantially inside portion 8, between tank 21 and assembly 16, to draw water from tank 21 and feed water under pressure to assembly 16.

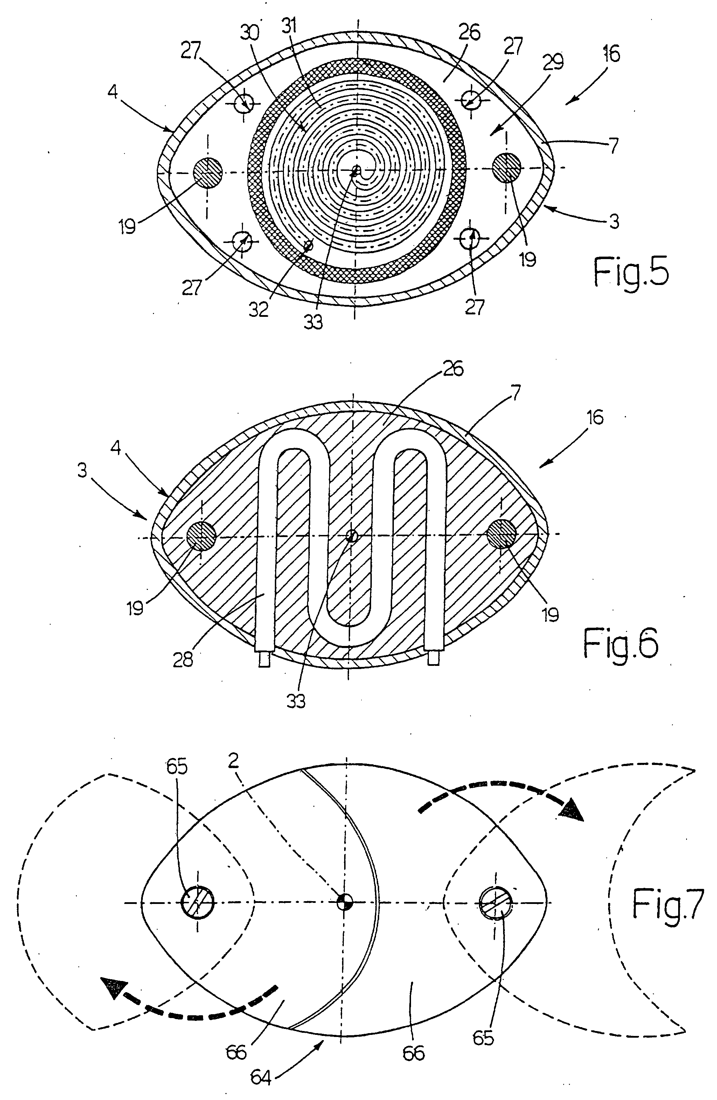

Assembly 16 comprises two plates 25, 26, of which plate 25 is located above plate 26, and which are coaxial with axis 2 and connected to each other by a number of screws (not shown) extending through plate 25 to engage respective holes 27 (Figure 5) formed in plate 26 and parallel to axis 2.

Plate 26 is fitted through with an electric heating resistor 28 extending crosswise to axis 2, and comprises, at a top surface 29 parallel to surfaces 9 and 10, a substantially spiral-shaped groove 30 closed at the top by plate 25 to define a heating coil 31 having an inlet 32 (Figure 5) communicating with pump 24, and an outlet defined by a hole 33 formed through plate 26 and coaxial with axis 2.

Plate 26 also has a tubular body 34 projecting downwards from plate 26 and defining, together with hole 33, a feed channel 35, which is coaxial with axis 2 and provides for feeding hot water under pressure to a substantially cylindrical wafer receptacle 36 by means of a sprinkler 37 defined by a number of channels 38 equally spaced about axis 2, and which, in the example shown, are three in number and slope at an angle of 30° with respect to axis 2.

Tubular body 34 houses a nonreturn valve 39 comprising a shutter 40, which is movable, by the hot water under pressure and in opposition to a spring 41 coaxial with axis 2, from a normal closed position to an open position respectively closing and opening channel 35.

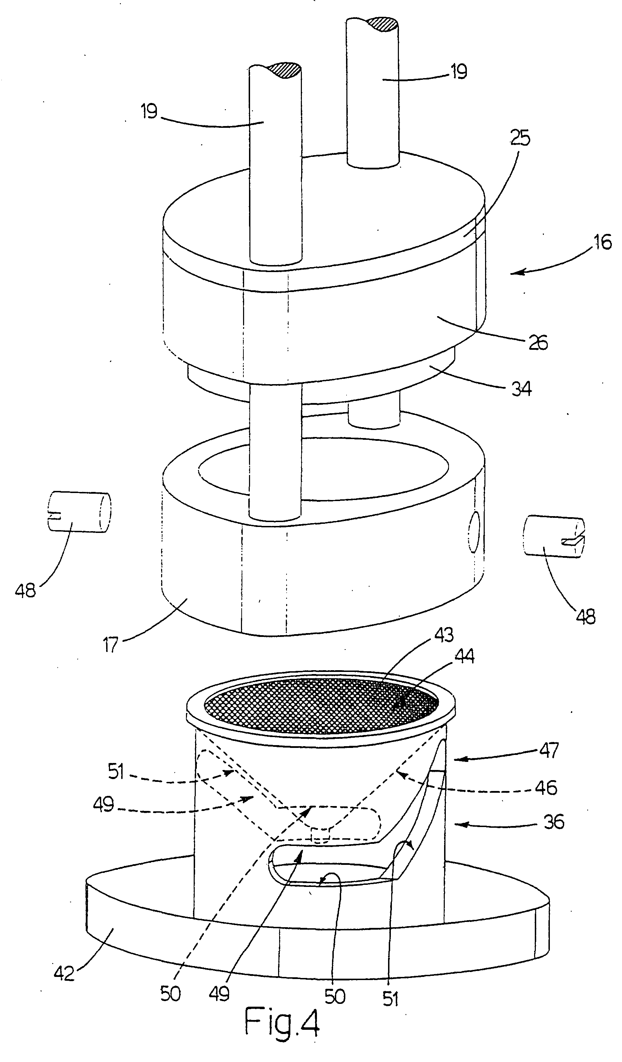

With reference to Figures 3 and 4, wafer receptacle 36 projects upwards and coaxially with axis 2 from a supporting member 42 housed in portion 11, is defined at the top by an interchangeable filter 43 defining a seat 44 for a ready-made wafer 45 of coffee, is defined at the bottom by a substantially funnel-shaped discharge conduit 46, and is connected in rotary and axially-sliding manner to tubular guide body 17 by a connecting device 47.

Device 47 comprises two pins 48, which are fitted through body 17, crosswise to axis 2, are positioned facing each other, and engage respective guides 49 formed through receptacle 36 and each comprising two portions 50, 51; portion 50 extending about axis 2, and portion 51 extending upwards and coiling about axis 2.

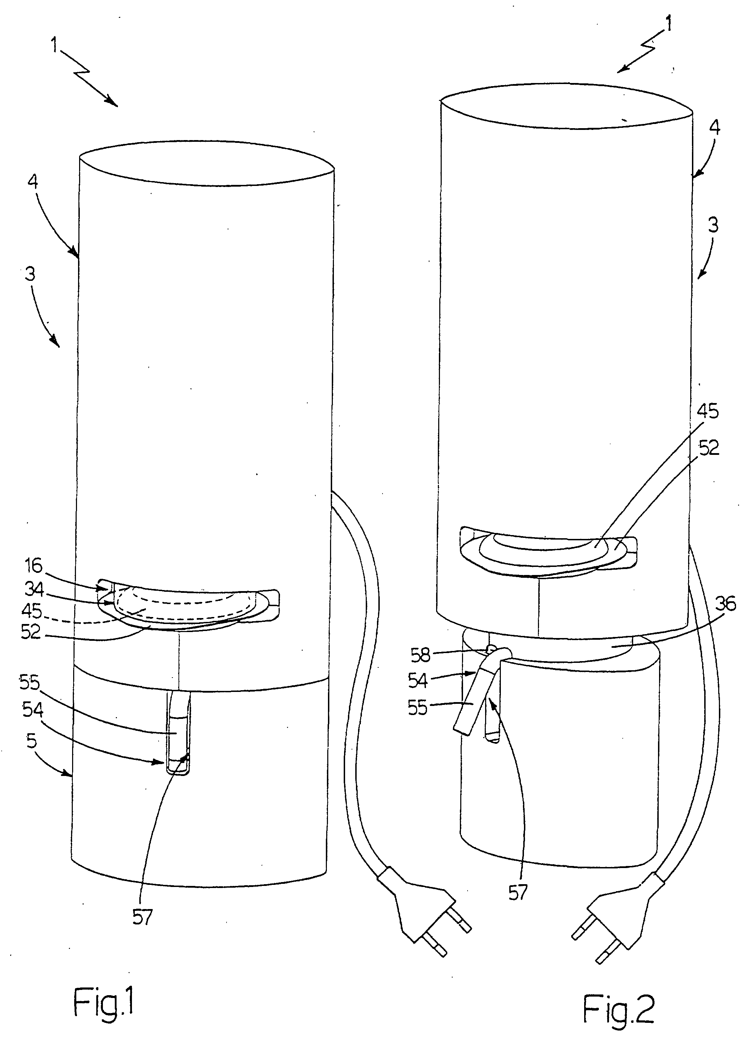

By means of a combined rotation-translation movement, receptacle 36 is therefore movable along body 17 between.a loading position wherein wafer 45 is loaded into seat 44 (Figure 2), and an engaged position wherein receptacle 36 is connected to assembly 16, and tubular body 34 contacts a peripheral edge 52 of wafer 45 in fluidtight manner (Figures 1 and 3).

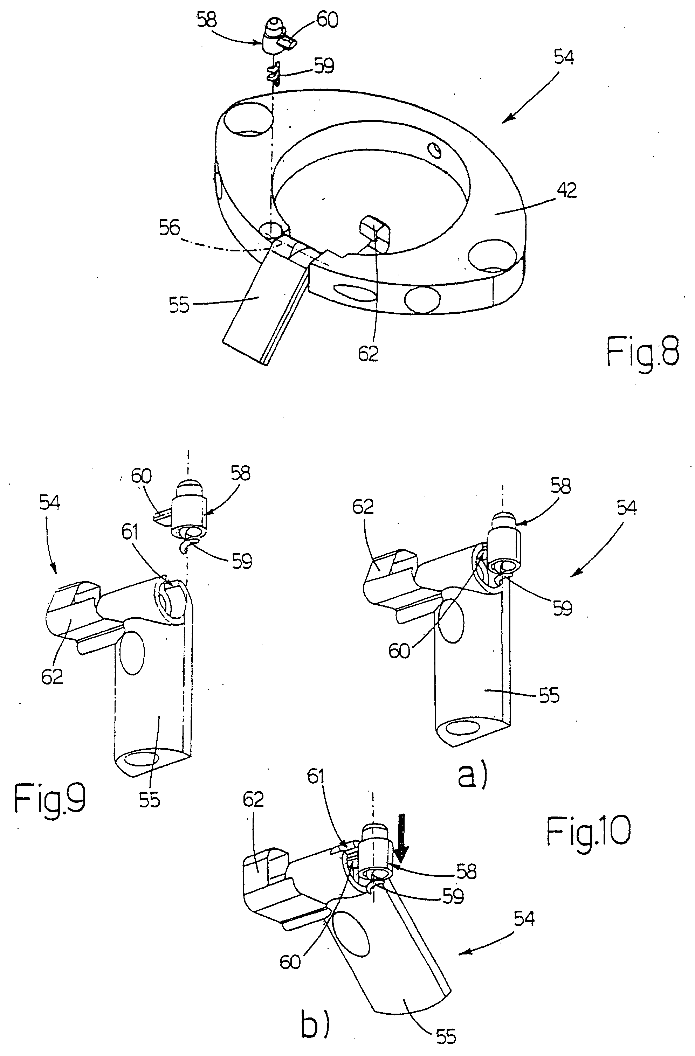

With reference to Figures 3, 8, 9 and 10, discharge conduit 46 of receptacle 36 is connected, via the interposition of a hose 53, to a dispensing device 54 comprising a dispensing member 55 connected in rotary manner to member 42 so as to oscillate, with respect to member 42 and about an axis 56 substantially crosswise to axis 2, between an extracted dispensing position (Figure 2) wherein member 55 substantially projects from a respective compartment 57 formed in body 5, and a withdrawn rest position (Figure 1) wherein member 55 is substantially housed inside compartment 57.

Device 54 also comprises a lock pin 58, which extends crosswise to axis 56, normally projects upwards from member 42 by means of a respective spring 59, has a rod 60 extending radially outwards from the outer surface of pin 58 itself, and is movable to and from a lock position wherein rod 60 engages a slot 61 formed in member 55 and parallel to axis 56, so as to lock member 55 in the withdrawn rest position.

When pin 58 is moved downwards in opposition to spring 59, rod 60 releases slot 61, and member 55, now free to rotate about axis 56, is moved into the extracted dispensing position by a spring 62 interposed between receptacle 36 and member 55 itself. In this connection, it should be pointed out that pin 58 may be moved downwards either manually, when machine 1 is in the loading position (Figure 2), or by means of tubular guide body 17, when machine 1 is moved between the loading and engaged positions.

Conversely, when member 55 is moved manually into the withdrawn rest position, pin 58 is moved by spring 59 into the lock position. In this connection, it should be pointed out that pin 58 can be set to the lock position both when machine 1 is in the loading position with member 42 and body 17 a given distance apart, and when machine 1 is in the engaged position, in which pin 58 may engage a seat 63 (Figure 3) formed in body 17.

Machine 1 also comprises a tubular base 64, which is connected in axially-sliding manner to portion 12 and is locked axially along portion 12 by means of two connecting screws 65, which extend parallel to axis 2 and through portion 13 to engage respective holes (not shown) formed in member 42 supporting receptacle 36. Base 64 is provided with two stabilizing feet 66 (Figure 7) connected in rotary manner to base 64 by screws 65 to oscillate, with respect to base 64, between a work position (shown by the dash line in Figure 7) and a rest position (shown by the continuous line in Figure 7), and defines, together with body 5 and member 42, a compartment 67 for housing a number of stacked cups 68.

Operation of machine 1 according to the present invention is easily deducible from the foregoing description with no further explanation required.

It should be pointed out, however, that, to set receptacle 36 to the engaged position beneath heating assembly 16, the user simply rotates the two bodies 4 and 5 with respect to each other.

## Claims

1. A portable espresso coffee machine comprising an outer casing (3); a tank (21); a receptacle (36) for housing a respective ground coffee wafer (45) having a peripheral edge (52) which rests on an open end of the receptacle (36); a heating assembly (16) for feeding hot water under pressure to said receptacle (36); and a pump (24) for feeding water under pressure from said tank (21) to said heating assembly (16); said outer casing (3) being substantially tubular, having a given longitudinal axis (2), and comprising a first portion (5) supporting said receptacle (36), **characterized in that** said outer casing (3) comprises a second portion (4) supporting said tank (21), said pump (24), and said heating assembly (16); and connecting means (47) being provided to permit displacement of the first (5) and second (4) portion with respect to each other and between a loading position wherein said wafer (45) is loaded into said receptacle (36), and an engaged position wherein said heating assembly (16) engages said edge (52) of the wafer (45) in fluidtight manner.

2. A machine as claimed in Claim 1, wherein said tank (21), said pump (24), said heating assembly (16) and said receptacle (36) are arranged successively and in that order along said axis (2).

3. A machine as claimed in Claim 1 or 2, wherein said axis (2) is a substantially vertical axis; said first portion (5) being located beneath said second portion (4).

4. A machine as claimed in any one of the foregoing Claims and also comprising a tubular guide body (17) carried by said second portion (4) and coaxial with said axis (2); said receptacle (36) being movable along the tubular body (17) and parallel to said axis (2).

5. A machine as claimed in Claim 4, wherein said connecting means (47) comprise at least one guide (49) extending radially through said receptacle (36); and pin means (48) carried by said tubular body (17) and which engage said guide (49) in sliding manner to move the first (5) and second (4) portion with respect to each other and between said loading and engaged positions.

6. A machine as claimed in Claim 5, wherein said guide (49) comprises a first part (51) coiling about said axis (2) so that, when said pin means (48) engage said first part (51), said first (5) and second (4) portion (4) rotate and translate with respect to each other along and about said axis (2), so as to move between said loading and engaged positions.

7. A machine as claimed in Claim 6, wherein said guide (49) also comprises a second part (50) connected to said first part (51) and extending about said axis (2); said pin means (48) engaging said second part (50) when said first (5) and second (4) portion are in said engaged position.

8. A machine as claimed in any one of the foregoing Claims, wherein said first portion (5) defines a compartment (67) housing a number of stacked cup-shaped containers (68); said compartment (67) being located beneath said receptacle (36).

9. A machine as claimed in any one of the foregoing Claims and also comprising coffee dispensing means (54) carried by said first portion (5) and movable, about a further axis (56) crosswise to said axis (2), between a rest position wherein said dispensing means (54) are housed substantially inside said first portion (5), and a dispensing work position wherein the dispensing means (54) are located at least partly outside the first portion (5) .

10. A machine as claimed in Claim 9, wherein said dispensing means (54) have a seat (61) formed parallel to said further axis (56); locking means (60) being movable to and from a lock position wherein the locking means (60) engage said seat (61) to lock said dispensing means (54) in the rest position.

11. A machine as claimed in any one of the foregoing Claims, wherein said heating assembly (16) comprises a channel (35) for feeding said hot water to said receptacle (36); valve means (39) being housed in said channel (35) to regulate flow of said hot water to said receptacle (36).

12. A machine as claimed in Claim 11, wherein said valve means (39) comprise a nonreturn valve (39) in turn comprising a shutter (40) movable, by the thrust of said hot water and in opposition to elastic return means (41), from a normal closed position to an open position opening said channel (35).

13. A machine as claimed in any one of the foregoing Claims, wherein said heating assembly (16) comprises a path (31) for heating the water under pressure supplied to the heating assembly (16) by said pump (24); said path (31) being substantially spiral-shaped.

## Patentansprüche

1. Tragbare Espressokaffeemsschine, umfassend ein Außengehäuse (3); einen Tank (21); einen Behälter bzw, eine Aufnahme (36), um eine entsprechende gemahlene Kaffeescheibe bzw. -tablette bzw. -behältnis (45) aufzunehmen, die eine Umfangskante bzw. -ränd (52) aufweist, welche an einem offenen Ende des Behälters (36) ruht; eine Heizanordnung (16), um Heißwasser unter Druck zu dem Behälter (36) zuzuführen; und eine Pumpe (24), um Wasser unter Druck von dem Tank (21) zu der Heizanordnung (16) zuzuführen; wobei das Außengehäuse (3) im wesentlichen rohrförmig ist, eine gegebene Längsachse (2) ausweist und einen ersten Abschnitt (5) umfaßt, der den Behälter (36) abstützt, **dadurch gekennzeichnet, daß** das Außengehäuse (3) einen zweiten Abschnitt (4) umfaßt, der den Tank (21), die Pumpe (24) und die Heizanordnung (16) unterstützt bzw. trägt; und Verbindungsmittel (47), die vorgesehen sind, um eine Verlagerung bzw. Verschiebung des ersten (5) und zweiten (4) Abschnitts in bezug aufeinander und zwischen einer Ladeposition, worin die Scheibe (45) in den Behälter (36) geladen ist, und einer in Eingriff stehenden bzw. Eingriffsposition, worin die Heizeinrichtung (16) die Kante (52) der Scheibe (45) in fluiddichter Weise ergreift, zu ermöglichen.

2. Maschine nach Anspruch 1, worin der Tank (21), die Pumpe (24), die Heizanordnung (16) und der Behälter (36) aufeinanderfolgend und in dieser Reihenfolge entlang der Achse (2) angeordnet sind.

3. Maschine nach Anspruch 1 oder 2, worin die Achse (2) eine im wesentlichen vertikale Achse ist; wobei der erste Abschnitt (5) unterhalb des zweiten Abschnitts (4) angeordnet ist.

4. Maschine nach einem der vorhergehenden Ansprüche, und auch umfassend einen rohrförmigen Führungskörper (17), der durch den zweiten Abschnitt (4) getragen ist und koaxial mit der Achse (2) ist; wobei der Behälter (36) entlang des rohrförmigen Körpers (17) und parallel zur Achse (2) bewegbar ist.

5. Maschine nach Anspruch 4, worin die Verbindungsmittel (47) wenigstens eine Führung (49) umfaßt, die sich radial durch den Behälter (36) erstreckt; und Zapfenmittel (48), die durch den rohrförmigen Körper (17) getragen sind und welche die Führung (49) in gleitender Weise ergreifen, um den ersten (5) und zweiten (4) Abschnitt in bezug aufeinander und zwischen der Lade- und Eingriffsposition zu bewegen.

6. Maschine nach Anspruch 5, worin die Führung (49) ein erstes Teil (51) umfaßt, das sich um die Achse (2) wickelt, so daß, wenn die Zapfenmittel (48) das erste Teil (51) ergreifen, der erste (5) und zweite (4) Abschnitt (4) sich in bezug aufeinander und entlang der und um die Achse (2) drehen und verschieben bzw. verlagern, um sich zwischen der Lade- und Eingriffsposition zu bewegen.

7. Maschine nach Anspruch 6, worin die Führung (49) auch ein zweites Teil (50) umfaßt, das mit dem ersten Teil (51) verbunden ist und sich entlang der bzw. um die Achse (2) erstreckt; wobei die Zapfenmittel (48) das zweite Teil (50) ergreifen, wenn sich der erste (5) und zweite (4) Abschnitt in der Eingriffsposition befinden.

8. Maschine nach einem der vorhergehenden Ansprüche, worin der erste Abschnitt (5) ein Abteil (67) definiert, das eine Anzahl von gestapelten schalenförmigen Behältern (68) aufnimmt; wobei das Abteil (67) benachbart dem Behälter (36) angeordnet ist.

9. Maschine nach einem der vorhergehenden Ansprüche und auch umfassend Kaffeeausgabemittel (54), die durch den ersten Abschnitt (5) getragen sind und um eine weitere Achse (56) quer zur Achse (2) verlaufend bzw. diese schneidend zwischen einer Ruheposition, worin die Ausgabemittel (54) im wesentlichen innerhalb des ersten Abschnittes (5) aufgenommen sind, und einer Ausgabearbeitsposition, worin die Ausgabemittel (54) wenigstens teilweise außerhalb des ersten Abschnittes (5) angeordnet sind, bewegbar sind.

10. Maschine nach Anspruch 9, worin die Ausgabemittel (54) einen Sitz (61) aufweisen, der parallel zu der weiteren Achse (56) ausgebildet ist; wobei verriegelnde bzw. Verriegelungsmittel (60) von und zu einer Verriegelungsposition bewegbar sind, worin die Verriegelungsmittel (60) den Sitz (61) ergreifen, um die Ausgabemittel (54) in der Ruheposition zu verriegeln.

11. Maschine nach einem der vorhergehenden Ansprüche, worin die Heizanordnung (16) einen Kanal (35) zum Zuführen des Heißwassers zu dem Behalter (36) umfaßt; wobei Ventilmittel (39) in dem Kanal (35) aufgenommen sind, um den Fiuß von Heißwasser zu dem Behälter (36) zu regulieren.

12. Maschine nach Anspruch 11, worin die Ventilmittel (39) ein Rückschlagventil (39) umfassen, das wiederum einen Verschluß (40) aufweist, der durch die Last bzw. Druck bzw, Schub des Heißwassers und entgegengesetzt zu elastischen Umkehr- bzw. Rückkehrmitteln (41) von einer normalerweise bzw, normalen geschlossenen zu einer offenen Position, die den Kanal (35) öffnet, bewegbar ist.

13. Maschine nach einem der vorhergehenden Ansprüche, worin die Heizanordnung (16) einen Weg bzw. Pfad (31) umfaßt, um das unter Druck zu der Heizanordnung (16) durch die Pumpe (24) zugeführte Wasser zu erhitzen; wobei der Pfad (31) im wesentlichen spiralförmig ist.

## Revendications

1. Machine à café express portable comportant un boîtier extérieur (3); un réservoir (21); un réceptacle (36) pour loger une galette de café moulu respective (45) présentant un bord périphérique (52) qui est en appui sur une extrémité ouverte du réceptacle (36); un ensemble de chauffage (16) pour envoyer de l'eau chaude sous pression audit réceptacle (36); et une pompe (24) pour envoyer de l'eau sous pression dudit réservoir (21) audit dispositif de chauffage (16); ledit boîtier extérieur (3) étant essentiellement tubulaire, présentant un axe longitudinal donné (2) et comprenant une première partie (5) supportant ledit réceptacle (36), **caractérisée en ce que** ledit boîtier extérieur (3) comprend une seconde partie (4) supportant ledit réservoir (21), ladite pompe (24) et ledit dispositif de chauffage (16); des moyens de raccordement (47) étant prévus pour permettre le déplacement de la première partie (5) et de la seconde partie (4) l'une par rapport à l'autre et entre une position de chargement, dans laquelle ladite galette (45) est chargée dans ledit réceptacle (36), et une position engagée, dans laquelle ledit dispositif de chauffage (16) s'applique contre ledit bord (52) de la galette (45), d'une manière étanche aux fluides.

2. Machine selon la revendication 1, dans laquelle ledit réservoir (21), ladite pompe (24), ledit dispositif de chauffage (16) et ledit réceptacle (36) sont disposés successivement et dans cet ordre le long dudit axe (2).

3. Machine selon la revendication 1 ou 2, dans laquelle ledit axe (2) est un axe sensiblement vertical; ladite première partie (5) étant située au-dessous de ladite seconde partie (4).

4. Machine selon l'une quelconque des revendications précédentes et comprenant également un corps de guidage tubulaire (17) porté par ladite seconde partie (4) et coaxial audit axe (2); ledit réceptacle (36) étant déplaçable le long du corps tubulaire (17) et parallèlement audit axe (2).

5. Machine selon la revendication 4, dans laquelle lesdits moyens de raccordement (47) comprennent au moins un guide (49) s'étendant radialement dans ledit réceptacle (36); et des moyens formant broches (48) portés par ledit corps tubulaire (17) et qui sont engagés dans ledit guide (49) à glissement de manière à déplacer la première partie (5) et la seconde partie (4) l'une par rapport à l'autre et entre ladite position de chargement et ladite position engagée.

6. Machine selon la revendication 5, dans laquelle ledit guide (49) comprend un premier tronçon (51) s'enroulant autour dudit axe (2) de sorte que, lorsque lesdits moyens formant broches (48) sont engagés dans ledit premier tronçon (51), ladite première partie (5) et ladite seconde partie (4) tournent et exécutent une translation l'une par rapport à l'autre, le long et autour dudit axe (2), de manière à se déplacer entre ladite position de chargement et ladite position engagée.

7. Machine selon la revendication 6, dans laquelle ledit guide (49) comprend également un second tronçon (50) raccordé audit premier tronçon (51) et s'étendant autour dudit axe (2); lesdits moyens formant broches (48) s'engageant dans ledit second tronçon (50) lorsque ladite première partie (5) et ladite seconde partie (4) sont dans ladite position engagée.

8. Machine selon l'une quelconque des revendications précédentes, dans laquelle ladite première partie (5) définit un compartiment (67) logeant un certain nombre de récipients en forme de gobelets empilés (68); ledit compartiment (67) étant situé au-dessous dudit réceptacle (36).

9. Machine selon l'une quelconque des revendications précédentes et comprenant également des moyens (54) de distribution du café portés par ladite première partie (5) et déplaçables, autour d'un autre axe (56) transversal audit axe (2), entre une position de repos, dans laquelle lesdits moyens de distribution (54) sont logés essentiellement à l'intérieur de ladite première partie (5), et une position d'opération de distribution, dans laquelle les moyens de distribution (54) sont situés, au moins en partie, à l'extérieur de la première partie (5).

10. Machine selon la revendication 9, dans laquelle lesdits moyens de distribution (54) possèdent un siège (61) formé parallèlement audit autre axe (56); des moyens de blocage (60) étant déplaçables en direction et à partir d'une position de blocage, dans laquelle les moyens de blocage (60) coopèrent avec ledit siège (61) pour bloquer lesdits moyens de distribution (54) dans la position de repos.

11. Machine selon l'une quelconque des revendications précédentes, dans laquelle ledit dispositif de chauffage (16) comprend un canal (35) pour envoyer ladite eau chaude audit réceptacle (36); des moyens formant soupape (39) étant logés dans ledit canal (35) pour régler l'écoulement de ladite eau chaude en direction dudit réceptacle (36).

12. Machine selon la revendication 11, dans laquelle lesdits moyens formant soupape (39) comprennent une soupape antiretour (39) qui, à son tour, comporte un obturateur (40) déplaçable, sous l'effet de la poussée de ladite eau chaude et à l'encontre des moyens de rappel élastique (41), depuis une position normale fermée jusque dans une position ouverte, qui ouvre ledit canal (35).

13. Machine selon l'une quelconque des revendications précédentes, dans laquelle ledit dispositif de chauffage (16) comprend un trajet (31) pour chauffer l'eau sous pression délivrée au dispositif de chauffage (16) par ladite pompe (24); ledit trajet (31) étant doté d'une forme sensiblement en spirale.
